# EUROPEAN PATENT APPLICATION

(11) **EP 4 708 409 A1**
(43) Date of publication of application: **11.03.2026**
(21) Application number: 25194638.0
(22) Date of filing: 07.08.2025
(51) Int. Cl.: H01M 8/0273, C25B 1/04, C25B 9/70, H01M 8/0276, H01M 8/0282, H01M 8/0286, H01M 8/12, H01M 8/2432, H01M 8/2483, H01M 8/021

(54) **INTERCONNECT INCLUDING CELL NEST AND METHOD OF ASSEMBLING AN ELECTROCHEMICAL CELL STACK INCLUDING THE INTERCONNECT**

(30) Priority: 28.08.2024 IN 202441064905
(71) Applicant: Bloom Energy Corporation, San Jose, CA 95134 (US)
(72) Inventor: SCHMAUSS, Travis A., San Jose, CA 95134 (US); BONE, Sagar, San Jose, CA 95134 (US); PARHAR, Sachin, San Jose, CA 95134 (US); LU, Zigui, San Jose, CA 95134 (US); EL BATAWI, Emad, San Jose, CA 95134 (US)
(74) Representative: Wichmann, Hendrik

(57) **Abstract**

An interconnect for an electrochemical cell stack includes reactant holes that extend through the interconnect, and a reactant side including a reactant field containing reactant channels and reactant ribs that extend between the reactant holes, a peripheral seal surface that surrounds the reactant field and the reactant holes, recess seal surfaces disposed inside of the peripheral seal surface on opposing sides of the reactant field and recessed relative to the peripheral seal surface, and nest sidewalls that connect the recess seal surfaces to the peripheral seal surface. The nest sidewalls extend substantially perpendicular to the peripheral seal surface and to the recess seal surfaces. The nest sidewalls, the recess seal surfaces, and tops of the reactant ribs at least partially define a cell nest configured to receive an electrochemical cell. An air side includes an air field disposed between the reactant holes, and ring seal surfaces disposed around the reactant holes.

## Description

### FIELD

Aspects of the present disclosure relate generally to electrochemical cell stack interconnects, and particularly to interconnects including a cell nest.

### BACKGROUND

A typical solid oxide electrochemical cell stack includes a ceramic electrochemical cell (e.g., fuel cell or electrolyzer cell) disposed between electrically conductive metal interconnects. Prior art solid oxide electrochemical cell interconnects are typically formed by powder metallurgy processes. However, powder metallurgy interconnects are expensive to manufacture.

### SUMMARY

According to various embodiments, an interconnect for an electrochemical cell stack includes reactant holes that extend through the interconnect, and a reactant side including a reactant field containing reactant channels and reactant ribs that extend between the reactant holes, a peripheral seal surface that extends around the perimeter of the interconnect, recess seal surfaces disposed inside portions of the peripheral seal surface on opposing sides of the reactant field and recessed relative to the peripheral seal surface, and nest sidewalls that connect the recess seal surfaces to the peripheral seal surface. The nest sidewalls extend substantially perpendicular to the peripheral seal surface and to the recess seal surfaces. The nest sidewalls, the recess seal surfaces, and tops of the reactant ribs at least partially define a cell nest configured to receive an electrochemical cell. An opposing air side of the interconnect includes an air field disposed between the reactant holes, and ring seal surfaces disposed around the reactant holes.

According to various embodiments, a method of forming a unit cell of an electrochemical cell stack comprises applying a seal material to a peripheral seal surface of a reactant side of a first interconnect, such that the seal material at least partially surrounds reactant holes and a reactant field of the first interconnect; applying the seal material to recess seal surfaces disposed inside of the peripheral seal surface on opposing sides of the reactant field and recessed relative to the peripheral seal surface; applying the seal material to nest sidewalls that connect the recess seal surfaces to the peripheral seal surface, wherein the nest sidewalls extend substantially perpendicular to the peripheral seal surface and to the recess seal surfaces, and wherein the nest sidewalls, the recess seal surfaces, and tops of reactant ribs of the reactant field at least partially define a cell nest; disposing a compliant contact layer in the cell nest, such that the contact layer contacts tops of reactant ribs in the reactant field; disposing an electrochemical cell on the compliant contact layer in the cell nest, such that opposing ends of the cell contact the seal material applied to recess seal surfaces and to the nest sidewalls; applying the seal material to ring seal surfaces of an air side of a second interconnect; and disposing the second interconnect on the first interconnect such that air ribs in an air field of the second interconnect contact the electrochemical cell.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.
FIG. 1 is a perspective view of an electrochemical stack, according to various embodiments of the present disclosure.
FIG. 2A is a cross-sectional view of an anode supported electrochemical cell, and FIG. 2B is a cross-sectional view of an electrolyte supported electrochemical cell, according to various embodiments of the present disclosure.
FIG. 3 is a partial cross-sectional view of a unit cell including interconnects and an electrochemical cell according to a comparative embodiment.
FIG. 4A is a perspective view of the reactant side of an interconnect, according to various embodiments of the present disclosure, FIG. 4B is an enlarged view of a portion P of FIG. 4A, and FIG. 4C is a perspective view of the air side of the interconnect of FIG. 4A.
FIGS. 5A-5D are plan views showing steps during assembly of a unit cell of an electrochemical cell stack, according to various embodiments of the present disclosure.
FIG. 6A is a perspective view of a portion P of FIG. 5D, FIG. 6B is a cross-sectional view taken along line L1 of FIG. 5D, and FIG. 6C is a cross-sectional view taken along line L2 of FIG. 5D.
FIG. 7 shows the air side of an alternative interconnect, according to an alternative embodiment of the present disclosure.
FIGS. 8A-8D are plan views showing steps during assembly of a unit cell of an electrochemical cell stack, according to the alternative embodiment of the present disclosure, and FIG. 8E is a cross-sectional view taken along line L1 of FIG. 8D.
FIGS. 9A and 9B are cross-sectional views showing an alternative method for sealing a unit cell using metal foils, according to an alternative embodiment of the present disclosure.
FIG. 10A is a plan view of the reactant side of an alternative interconnect, according to another alternative embodiment of the present disclosure, and FIG. 10B is a cross-sectional view taken through line L1 of FIG. 10A. FIGS. 10C and 10D are side cross-sectional view of alternative unit cells including an electrochemical cell and the alternative interconnects of FIGS. 10A and 10B.
FIG. 11A is a plan view of the reactant side of an alternative interconnect, according to another alternative embodiment of the present disclosure, FIG. 11B is a plan view of the air side of the interconnect, and FIG. 11C is a plan view showing a unit cell including an electrochemical cell and the alternative interconnects of FIGS. 11A and 11B.
FIG. 12A is a perspective view showing the reactant side (e.g., fuel side) sheet of an alternative interconnect, according to various embodiments of the present disclosure, FIG. 12B is a perspective view showing an air side sheet of an alternative interconnect, according to various embodiments of the present disclosure, FIG. 12C shows a perspective view during a process of forming the alternative interconnect using the sheets of FIGS. 12A and 12B, and FIG. 12D is a perspective view of a portion of the completed alternative interconnect.
FIG. 13 is an expanded perspective view of a unit cell which includes the alternative interconnects of FIGS. 12A - 12D.

### DETAILED DESCRIPTION

The present disclosure is described more fully herein with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and fully conveys the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element is referred to as being "directly on" or "directly connected to" another element or layer, there are no intervening elements or layers present. It will be understood that for the purposes of this disclosure, "at least one of X, Y, and Z" can be construed as X only, Y only, Z only, or any combination of two or more items X, Y, and Z (e.g., XYZ, XYY, YZ, ZZ).

Electrochemical cell systems include fuel cell and electrolyzer cell systems. In a high temperature fuel cell system, such as a solid oxide fuel cell (SOFC) system, an oxidizing flow is directed to the cathode side of the fuel cell while a fuel flow is directed to the anode side of the fuel cell. The oxidizing flow is typically air, while the fuel flow can be a hydrogen containing gas including hydrogen (H₂), ammonia or a hydrocarbon fuel, such as methane, natural gas, pentane, ethanol, or methanol. The fuel cell, operating at a typical temperature between 650°C and 950°C, enables the transport of negatively charged oxygen ions from the cathode flow stream to the anode flow stream, where the oxygen ions combine with either free hydrogen or hydrogen in a hydrocarbon molecule to form water vapor and/or with carbon monoxide to form carbon dioxide. The excess electrons from the negatively charged ions are routed back to the cathode side of the fuel cell through an electrical circuit completed between anode and cathode, resulting in an electrical current flow through the circuit. In an electrolyzer system, such as a solid oxide electrolyzer system, water (e.g., steam) is separated into hydrogen and oxygen by applying a voltage across the electrolyzer cells.

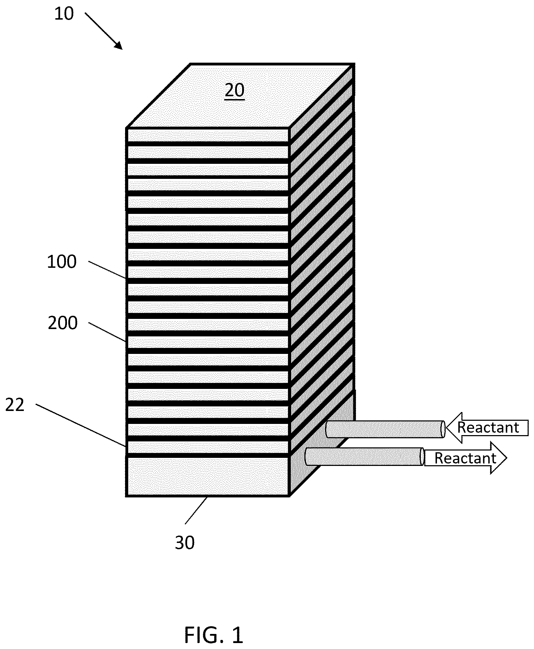

FIG. 1 is a perspective view of an electrochemical cell stack 10, according to various embodiments of the present disclosure. In the embodiments below, the stack 10 is described as being operated as a solid oxide fuel cell (SOFC) stack 10. However, it should be noted that the stack 10 may also be operated as an electrolyzer (e.g., a solid oxide electrolyzer cell (SOEC) stack). Referring to FIG. 1, the stack 10 includes electrochemical cells 100, such as fuel cells (e.g., SOFCs) or electrolyzer cells (e.g., SOECs), separated by interconnects 200. The cells 100 include a reactant electrode and an air electrode separated by a solid oxide electrolyte. For SOFCs 100, the reactant comprises at least one of the above described fuels, the reactant electrode comprises the anode electrode, and the air electrode comprises the cathode electrode. For SOECs 100, the reactant comprises steam, the reactant electrode comprises the cathode electrode, and the air electrode comprises the anode electrode.

The stack 10 also includes a top end plate 20, an opposing bottom end plate 22. In some embodiments, the top end plate 20 and the bottom end plate 22 may be modified interconnects that lack one of reactant channels or air channels. In other embodiments, the top end plate 20 and/or the bottom end plate 22 may be the same design as the interconnects 200. An electrochemical cell system may include electrochemical cell columns comprising one or more stacks 10. In the embodiment shown in FIG. 1, the column comprises a single stack 10. However, in alternative embodiments, the column may include plural stacks 10 located over each other.

The interconnects 200 electrically connect adjacent cells 100 in the stack 10. In particular, an interconnect 200 may electrically connect the reactant electrode of one fuel cell 100 to the air electrode of an adjacent fuel cell 100. An optional Ni mesh or another three dimensional conductive structure may be used to electrically connect the interconnects 200 to the reactant electrodes.

The stack 10 may be disposed on a manifold 30 configured to provide the reactant to the stack 10. In particular, as discussed in detail below, the stack 10 may be internally manifolded for reactants, in order to provide a low pressure drop and a high reactant flow rate. For example, in the SOFC stack configuration, the manifold 30 may provide the fuel to the stack 10 and may receive fuel exhaust (e.g., steam, carbon dioxide, unreacted fuel, etc.) from the stack 10. In the SOEC stack configuration, the manifold 30 may provide steam and/or carbon dioxide to the stack 10 and may receive hydrogen and unreacted steam from the stack 10.

Electrochemical cells 100, such as SOFCs and SOECs, are typically supported to increase mechanical stability and reliability. For example, supported cells include electrode-supported cells, electrolyte-supported cells, and co-supported cells. Electrolyte-supported cells include a relatively thick electrolyte upon which relatively thin electrodes are formed. Electrode supported cells include a relatively thick supporting electrode (e.g., reactant electrode) to provide structural support, and co-supported cells may include a relatively thick supporting electrode and a relatively thick electrolyte.

Electrolyte-supported cells offer numerous advantages including improved sealing resulting from a dense electrolyte perimeter and reduction stability due to having a thin reactant electrode. However, electrolyte-supported cells often exhibit higher area specific resistance (e.g., Ohmic resistance) values than electrode-supported cells because the electrolyte typically exhibits lower conductivity than the anode or cathode materials. For example, in electrolyte-supported solid oxide fuel cells, the ohmic resistance of the electrolyte may be the largest contributor to the total area specific resistance of the cell at typical operating temperatures (e.g., at about 800 to 850 °C).

Electrode-supported SOFCs and SOECs are typically produced by co-sintering a support electrode material and a coating of electrolyte material. Electrode-supported cells include anode supported cells having a relatively thick anode and cathode supported cells having a relatively thick cathode. Reactant electrode supported cells (e.g., anode supported fuel cells or cathode supported electrolyzer cells) may beneficially provide a higher CTE and lower operating temperature relative to electrolyte supported cells. As such, reactant electrode supported cells may be especially suitable for use with interconnects formed from ferritic or martensitic stainless steel sheet metal.

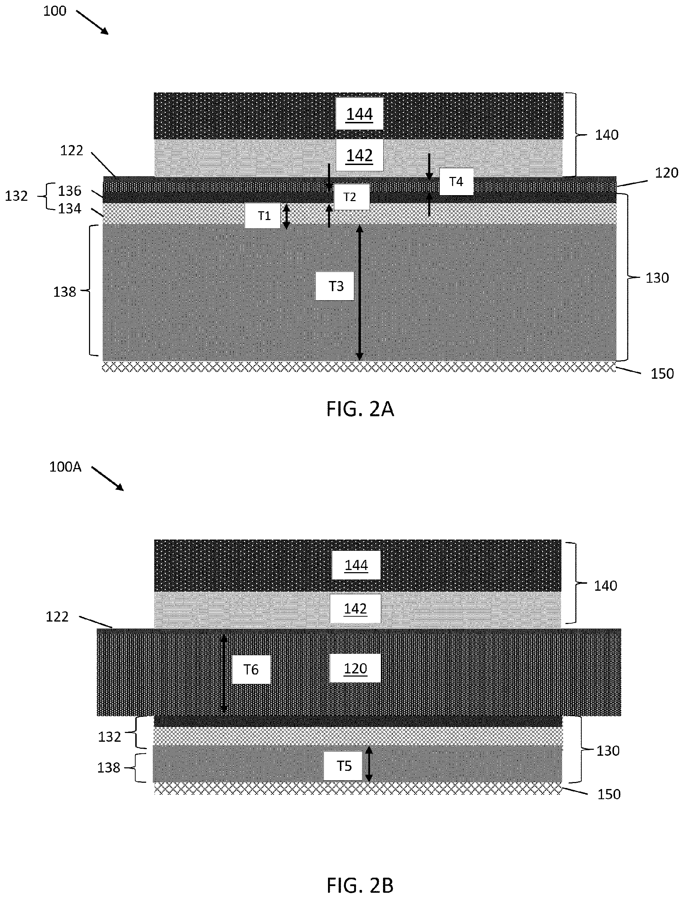

FIG. 2A is a cross-sectional view of reactant electrode supported electrochemical (RESE) cell (e.g., an anode supported fuel cell or a cathode supported electrolyte cell) 100, and FIG. 2B is a cross-sectional view of an electrolyte supported electrochemical cell 100A, according to various embodiments of the present disclosure.

Referring to FIGS. 2A and 2B, the electrochemical cells 100, 100A may include an electrolyte 120, a reactant electrode 130 disposed on a first side (e.g., reactant side) of the electrolyte 120, and an air electrode 140 disposed on a second side (e.g., air side) of the electrolyte 120. The electrolyte 120 may be formed of an ionically conductive ceramic material, such as a doped zirconia material or a doped ceria material. For example, the electrolyte 120 may include scandia stabilized zirconia (SSZ), yttria stabilized zirconia (YSZ), yttria-ceria-stabilized zirconia (YCSZ), ytterbia-ceria-scandia-stabilized zirconia (YbCSSZ), or blends thereof.

Preferably, the electrolyte may include YbCSSZ, wherein scandia may be present in an amount equal to 9 to 11 mol %, such as 10 mol %, ceria may present in amount greater than 0 and equal to or less than 3 mol %, for example 0.5 mol % to 2.5 mol %, such as 1 mol %, and ytterbia may be present in an amount greater than 0 and equal to or less than 2.5 mol %, for example 0.5 mol % to 2 mol %, such as 1 mol %, as disclosed in U.S. Pat. No. 8,580,456, which is incorporated herein by reference.

The electrolyte 120 may optionally include a barrier layer 122 disposed on the air side. The barrier layer 122 may be configured to prevent diffusion of air electrode materials into the electrolyte 120. For example, the barrier layer 122 may be formed of a dense gadolinium or samarium doped ceria material, which may have a thickness ranging from about 200 nm to about 800 nm.

The air electrode 140 may be disposed on the barrier layer 122. The air electrode 140 may be a single or multi-layer structure. For example, the air electrode 140 may include an air side functional layer 142 and an air side contact layer 144. The functional layer 142 may include a catalyst, such as lanthanum strontium manganate, lanthanum strontium cobaltite, lanthanum strontium cobalt ferrite or lanthanum nickel ferrite. The contact layer 144 may include an electrically conductive material, such as lanthanum strontium manganate configured to reduce electrical resistance between the air side electrode 140 and an adjacent component, such as an interconnect.

The reactant electrode 130 may include a catalyst electrode 132 disposed on the reactant side of the electrolyte 120 and a support 138 disposed on the catalyst electrode 132. The catalyst electrode 132 may include a nickel containing phase and an ionically conductive ceramic phase, such as SSZ, YSZ, YbCSSZ, or a doped ceria such as gadolinia, yttria and/or samaria doped ceria, such as samaria-doped ceria (SDC). Preferably, the catalyst electrode 132 comprises a Ni-SDC cermet or a Ni-YbCSSZ cermet. In some embodiments, the Ni phase may include additional dopants to improve phase stability and/or redox tolerance.

The catalyst electrode 132 may be a single or multi-layer structure. For example, in a SOFC 100, the catalyst electrode 132 may include a first functionally graded anode (FGA) layer 134 and a second FGA layer 136. The first FGA layer 134 may include a lower ratio of the nickel containing phase to the ionically conductive phase than the second FGA layer 136.

The first FGA layer 134 may have a thickness T1 ranging from about 7 µm to about 17 µm, such as from about 10 µm to about 14 µm, or from about 11 µm to about 13 µm. The second FGA layer 136 may have a thickness T2 ranging from about 2 µm to about 10 µm, such as from about 4 µm to about 8 µm, or from about 5 µm to about 6 µm. However, the present disclosure is not limited to any particular FGA layer thicknesses.

The support 138 may be formed of a cermet material having a metal phase and a ceramic phase. For example, the support 138 may include a nickel-containing phase (e.g., nickel phase) and a ceramic phase. The nickel phase may include nickel and/or nickel alloys and may optionally include other additional metal dopants to improve phase stability and/or redox tolerance. A compliant contact layer 150, such as a nickel mesh, may be disposed below the reactant electrode 130.

The ceramic phase may comprise a stabilized zirconia, yttria stabilized zirconia (YSZ), scandia stabilized zirconia (SSZ), yttria-scandia stabilized zirconia (YSSZ), and/or a doped ceria material, such as gadolinia, yttria and/or samaria doped ceria. The ceramic phase may be optionally doped with additional phase stabilizers, as discussed in detail below. Preferably, the ceramic phase of the support 130 comprises YSZ comprising from about 3 mol% to about 10 mol% yttria (3-10)-YSZ. The ceramic phase (e.g., the (3-10)-YSZ) may include additional dopants (e.g., phase stabilizers) to improve phase stability.

As shown in FIG. 2A, in the RESE cell 100, the support 138 may have a thickness T3 ranging from about 200 µm to about 600 µm, such as from about 300 µm to about 500 µm, from about 350 µm to about 450 µm, or about 400 µm. The electrolyte 120 may have a thickness T4 ranging from about 5 µm to about 15 µm, such as from about 8 µm to about 12 µm, or from about 10 µm. Accordingly, the relatively thick support 138 may support the relatively thin electrolyte 120.

As shown in FIG. 2B, the electrolyte supported electrochemical cell 100A may include a relatively thick electrolyte 120. In particular, electrolyte 120 may have a thickness T6 ranging from about 50 µm to about 200 µm, such as from about 75 µm to about 125 µm, from about 85 µm to about 115 µm, or about 100 µm. The relatively thick electrolyte 120 may be self-supporting.

In some embodiments, electrochemical cell 100A may optionally include a relatively thin support 138. For example, the support 138 may have a thickness T5 ranging from about 20 µm to about 100 µm, such as from about 25 µm to about 75 µm, or from about 40 µm to about 60 µm. As such, the thickness of the support 138 may be reduced, as compared to the support 138 of the cell 100, or the support 138 may be omitted, without compromising cell strength.

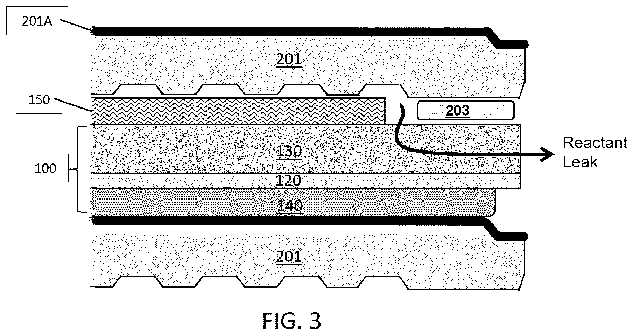

FIG. 3 is a partial cross-sectional view of a unit cell including interconnects and an electrochemical cell according to a comparative embodiment. The comparative embodiment unit cell includes an RESE cell 100 disposed between two comparative embodiment interconnects 201 and sealed by a peripheral seal 203. The interconnects 201 may contain a protective coating 201A, such as a lanthanum strontium manganite and/or a manganese cobalt oxide spinel coating, on their air sides.

The present inventors determined that the exposure of the opposing edges of the cell 100 results in the formation of a reactant leak path. In particular, reactant provided to the upper surface of the cell 100 diffuses into the reactant electrode 130, under the peripheral seal 203, and out of opposing edges of the reactant electrode 130. This reactant leakage may result in combustion when the reactant is a fuel, such as hydrogen (H₂) or a hydrocarbon gas. Furthermore, the exposed edges of the reactant electrode may result in formation of porous nickel oxide phase within the reactant electrode 130. The porous nickel oxide phase may cause expansion of the reactant electrode 130, which may apply tension to the adjacent electrolyte 120 and which may result in cracking of the electrolyte 120.

Accordingly, various embodiments provide improved interconnects including features that allow an electrochemical cell to be "nested" between interconnects to prevent or reduce reactant leakage.

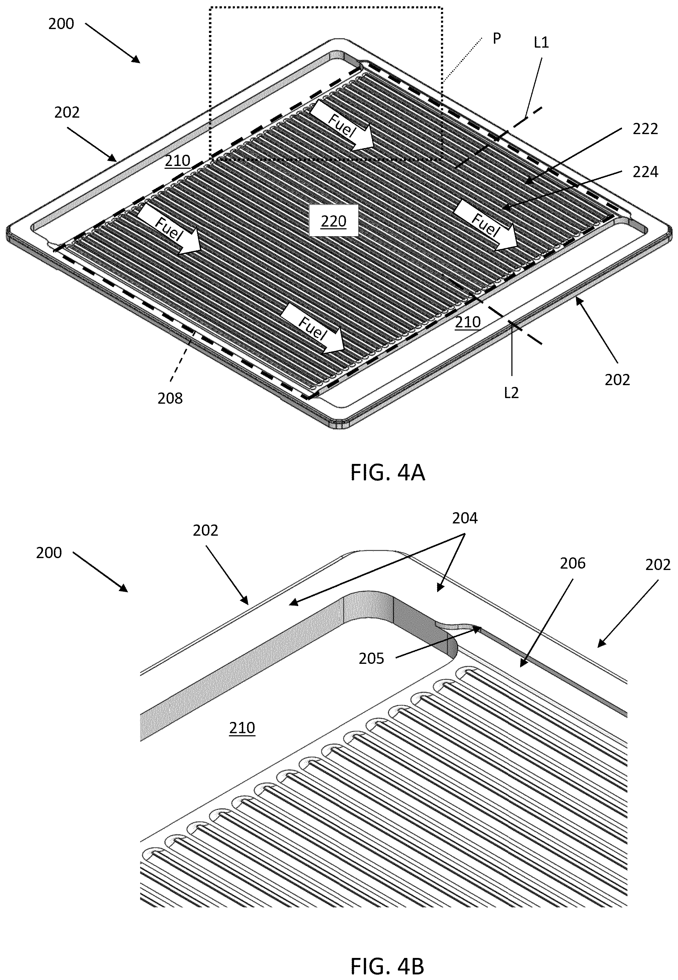

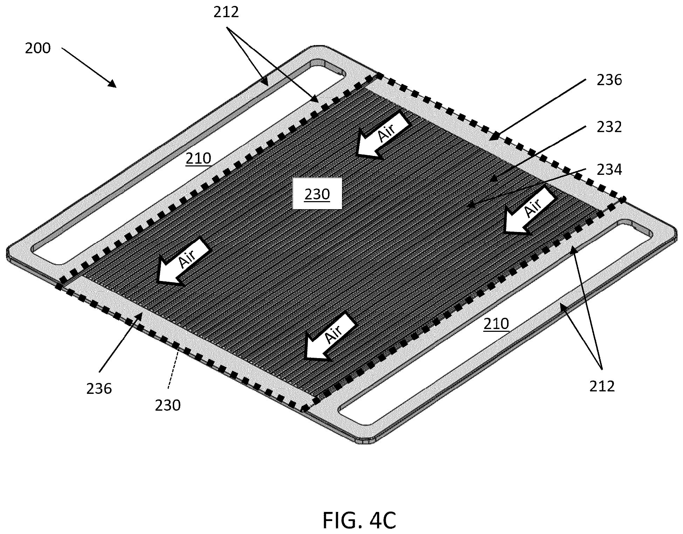

FIG. 4A is a perspective view of the reactant side (e.g., fuel side) of an interconnect 200, according to various embodiments of the present disclosure, FIG. 4B is an enlarged view of a portion P of FIG. 4A, and FIG. 4C is a perspective view of the air side of an interconnect 200.

Referring to FIGS. 4A and 4B, the interconnect 200 may be formed of a ferritic stainless steel, such as SS 430 steel containing 16 to 18 wt.% Cr, below 0.12 wt.% C, between 0 and 0.75 wt.% Ni, between 0 and 1 wt.% Si and/or Mn each, and balance iron with various impurities (e.g., unavoidable impurities, e.g., 0 to less than 0.1 wt.% Mo), or VDM^{®} Crofer 22 APU alloy which contains 20 to 24 wt.% Cr, 0.3 to 0.8 wt.% Mn, 0.04 to 0.2 wt.% La, 0.03 to 0.2 wt.% Ti and balance iron and various impurities (e.g., unavoidable impurities). Thus, the interconnect 200 may comprise a ferritic stainless steel interconnect containing at least 15 wt.% Cr and at least 50 wt.% Fe, such as 16 to 24 wt.% Cr and 76 to 84 wt. % Fe.

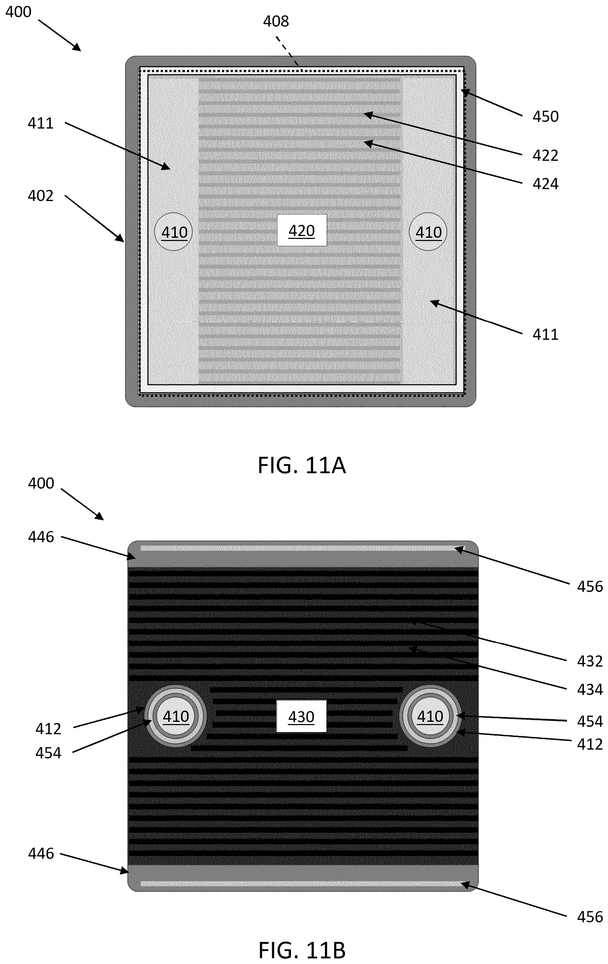

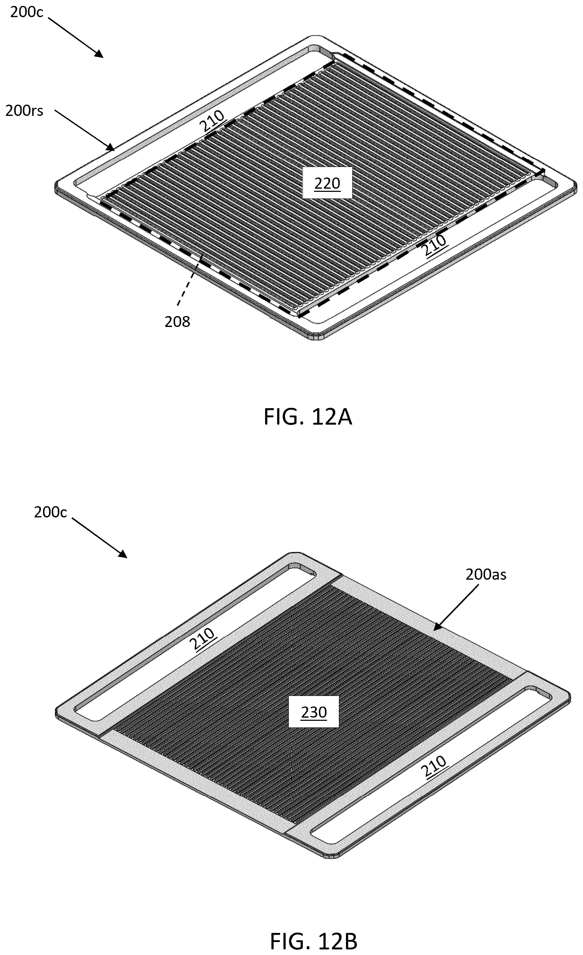

The interconnect 200 may be formed by any suitable method. For example, the interconnect 200 may be formed by machining, laser cutting, stamp cutting, powder pressing, laser powder bed fusion, sand casting, binder jet 3D printing, or the like. As discussed below with respect to FIGS. 11A, 11B, and 12A - 12D, in some embodiments the interconnect 200 may be formed by a stamping and brazing process.

The interconnect 200 may include a frame 202 that extends around the perimeter of the interconnect 200. In particular, the frame 202 may be a rectangular structure that forms the perimeter of the interconnect 200. The interconnect 200 may include reactant holes 210 disposed inside of the frame 202 and adjacent to opposing first and second peripheral sides of the frame 202. The reactant holes 210 may be through holes that extend through the interconnect 200 in a thickness direction. While an embodiment is illustrated in which only one reactant hole 210 is located along each of the first and second peripheral sides of the frame 202, in alternative embodiments, plural reactant holes 210, such as two, three or four reactant holes, may be located along each of the first and second peripheral sides of the frame 202. Thus, the interconnect 200 is internally manifolded for reactant (e.g., fuel or steam).

The reactant side of the interconnect 200 may include a reactant field (i.e., a fuel or steam flow field) 220 that extends between the reactant holes 210 on the opposing first and second peripheral sides of the frame 202. The reactant field 220 may include reactant channels 222 and reactant ribs 224 that separate and define the reactant channels 222. A reactant (e.g., a fuel or steam) may flow through the reactant channels 222 and across the reactant field 220, from one reactant hole (e.g., inlet hole) 210 located on the first peripheral side of the frame 202 to the other reactant hole (e.g., outlet hole) 210 on the opposing second peripheral side of the frame 202.

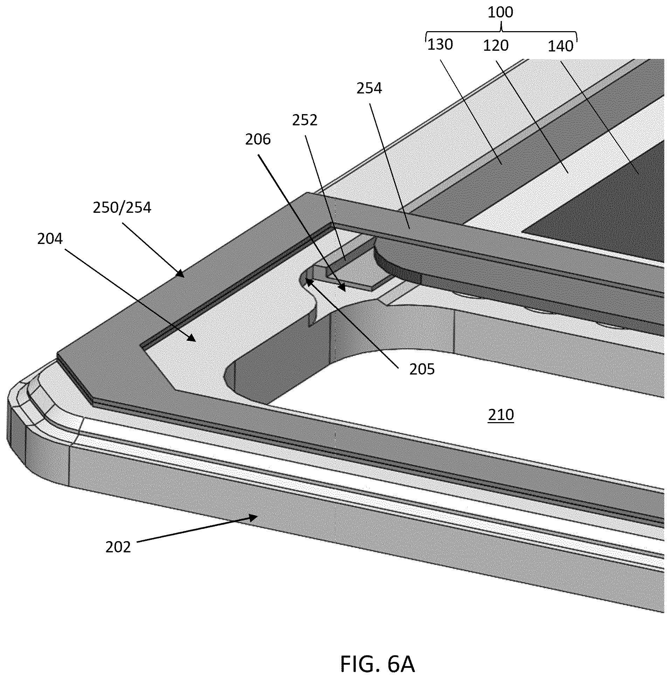

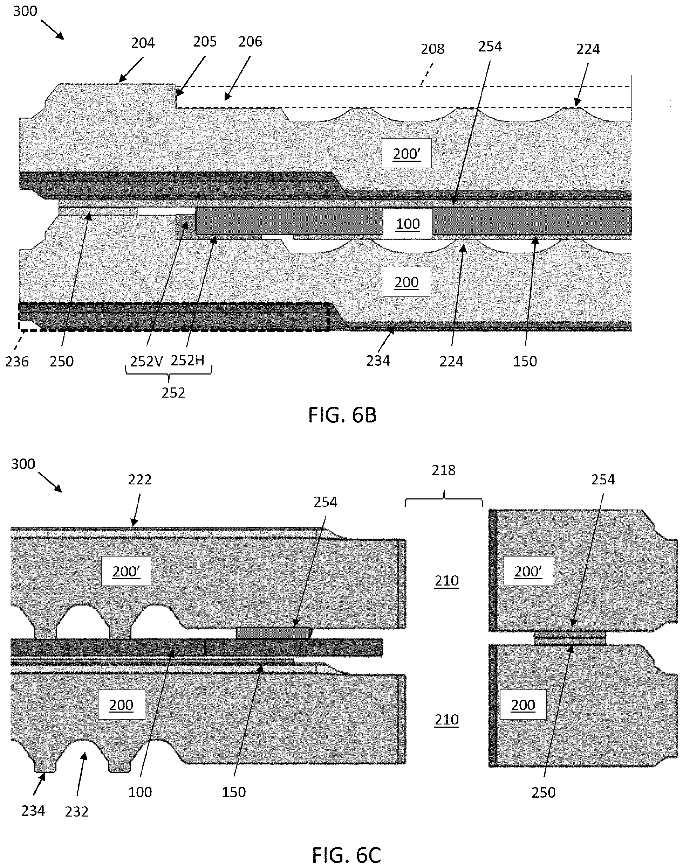

As shown in FIG. 4B, the top surface of the reactant side of the frame 202 comprises a planar peripheral seal surface 204 that extends around the perimeter of the interconnect 200 and recess seal surfaces 206 that extend along opposing third and fourth peripheral edges of the interconnect 200, between the reactant field 220 and the peripheral seal surface 204. In particular, the peripheral seal surface 204 may be a planar surface that surrounds the reactant holes 210 and the reactant field 220. The recess seal surfaces 206 may be coplanar surfaces that are recessed with respect to the peripheral seal surface 204. For example, the recess seal surfaces 206 may be recessed by a depth ranging from about 0.2 mm to about 1 mm, such as from about 0.3 mm to about 0.7 mm, or about 0.4 mm to about 0.6 mm with respect to the plane of the peripheral seal surface 204. In other words, the height of sidewalls 205 of the frame 202 (e.g., nest sidewalls 205) that extend vertically to connect the recess seal surfaces 206 and the peripheral seal surface 204, may have a height that is within the above range. The sidewalls 205, the recess seal surfaces 206, and the tops of the ribs 224 may at least partially define a cell nest 208 configured to receive an electrochemical cell, as described below with respect to FIGS. 6A and 6B.

Referring to FIG. 4C, the air side of the interconnect 200 may include an air field (i.e., air flow field) 230 disposed between the reactant holes 210. The air field 230 may include air channels 232, air ribs 234 that separate the air channels 232, and air side recesses 236. The air side recesses 236 may be disposed on the third and fourth peripheral edges of the interconnect 200 and may extend between the reactant holes 210. Thus, the interconnect 200 is externally manifolded for air.

The air side of the interconnect 200 may also include ring seal surfaces 212 that surround the reactant holes 210. The ring seal surfaces 212 may be coplanar with the tips of the ribs 234. The air side recesses 236 may be coplanar with bottoms of the air channels 232. In various embodiments, the width of the air side recesses 236 (e.g., a distance between the ends of the air ribs 234 and an adjacent edge of the interconnect 200), may range from about 5 mm to about 15 mm, such as from about 5 mm to about 12 mm, or about 8 mm to 10 mm.

Air may flow through the air channels 232 from one of the air side recesses 236 to the other air side recess 236. Accordingly, air and reactant may flow across the interconnect 200 in substantially perpendicular directions. As used herein, substantially perpendicular includes plus or minus fifteen degrees from perpendicular as well as perpendicular. As such, the interconnect 200 may be referred to as having a crossflow configuration.

The air field 230 may be exposed to air at high temperatures when utilized in a solid oxide electrochemical cell stack. As such, the air field 230 may include an electrically conductive protective coating to protect the air field 230 of the interconnect 200 from corrosion and/or oxidation. In some embodiments, the protective coating may comprise a lanthanum strontium manganate and/or manganese cobalt oxide spinel material. In other embodiments, the protective coating comprise a metal oxide layer that is formed in-situ on the interconnect 200 by oxidation.

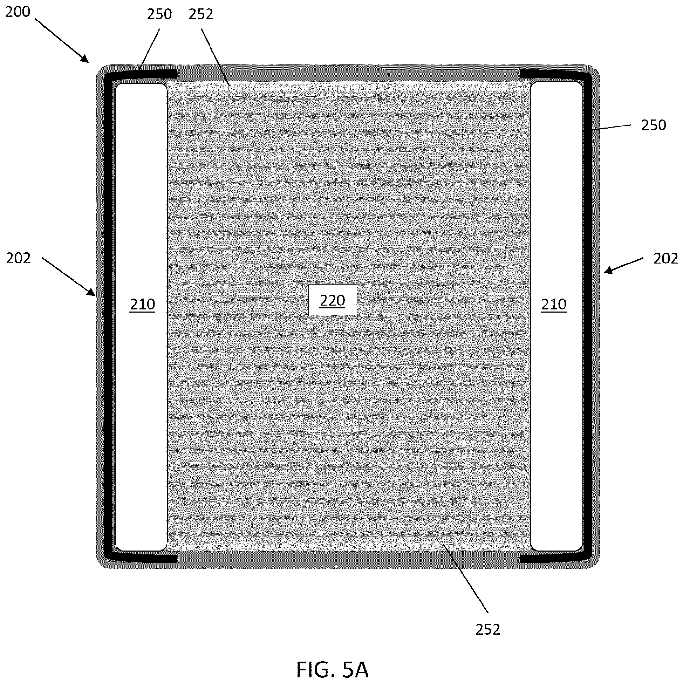

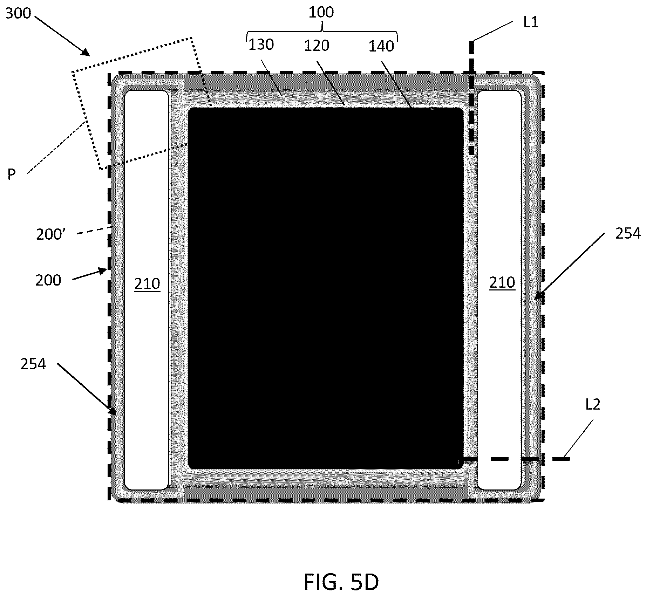

FIGS. 5A-5D are plan views showing the assembly of a unit cell of an electrochemical cell stack, according to various embodiments of the present disclosure. FIG. 6A is a perspective view of a portion P of FIG. 5D, FIG. 6B is a cross-sectional view taken along line L1 of FIG. 5D, and FIG. 6C is a cross-sectional view taken along line L2 of FIG. 5D.

Referring to FIGS. 4A and 5A, edge seals 250 and recess seals 252 may be formed by dispensing a glass or glass-ceramic seal material on the reactant side of a first interconnect 200. In particular, the seal material may be dispensed on the peripheral seal surface 204 and around peripheral edges of the reactant holes 210 to form generally C-shaped edge seals 250, and the seal material may be dispensed on the recess seal surfaces 206 to form generally linear recess seals 252.

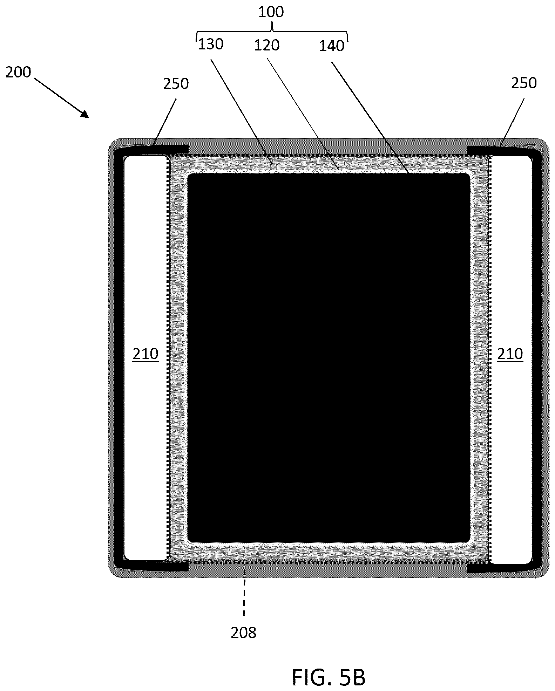

Referring to FIGS. 4A, 5A, and 5B, a compliant contact layer 150 is placed on the reactant ribs 224 of the reactant field 220 inside the cell nest 208. Then, an electrochemical cell 100, such as an RESE cell, is placed over the compliant contact layer 150 at least partially within the cell nest 208 of the first interconnect 200. In particular, the cell 100 may be positioned such that the reactant electrode 130 faces the compliant contact layer 150 and the reactant field 220, and the air electrode 140 faces away from the reactant field 220. Opposing edges of the cell 100 may be disposed on the recess seals 252. The cell 100 may be positioned on the first interconnect 200 before the seals 250, 252 are cured and/or sintered (e.g., while the seal material is in a "wet" state). The resulting structure may be compressed by applying pressure to the cell 100, such that the recess seals 252 flow between sides of the cell 100 and the cell nest 208 sidewalls 205 extending from the recess seal surfaces 206. In some embodiments, the seal material may be cured after compression, for example using heat and/or ultraviolet radiation.

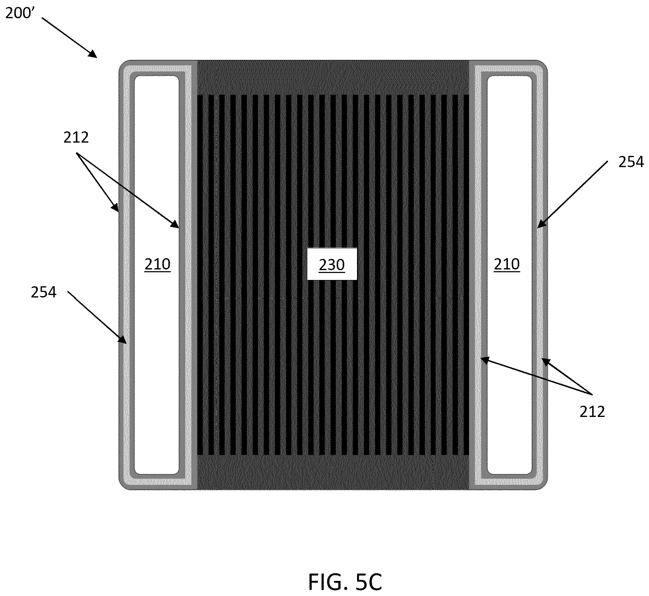

Referring to FIGS. 4C and 5C, ring seals 254 may be formed by dispensing a glass or glass-ceramic seal material on the air side of a second interconnect 200'. In particular, the seal material may be dispensed on the ring seal surfaces 212 of the interconnect 200', such that the ring seals 254 surround the reactant holes 210.

Referring to FIGS. 5D and 6A, the second interconnect 200' may be disposed air side down on the first interconnect 200 and cell 100 structure shown in FIG. 5B to form the unit cell 300 (see FIGS. 6B and 6C). The ring seals 254 may overlap the edge seals 250 and may overlap with portions of the reactant electrode 130. The ring seals 254 may also extend over portions of the recess seals 252. In some embodiments, the peripheral seals 250 and the ring seals 254 may merge to increase the thickness of portions of the ring seals 254 that overlap the peripheral seal surface 204.

As shown in FIGS. 6A-6C, the recess seals 252 may contact the recess seal surfaces 206 and the sidewalls 205 that extend vertically from the horizontal recess seal surfaces 206. A compliant contact layer 150 may be disposed between the cell 100 and the first interconnect 200. In particular, the contact layer 150 may be a nickel mesh that contacts tips of the reactant ribs 224 and the reactant electrode 130. The reactant holes 210 may be aligned to form stack reactant manifolds 218.

The tops of the reactant ribs 224, the recess seal surfaces 206, and the sidewalls 205 of the frame 202 that connect the recess seal surfaces 206 to the peripheral seal surface 204 may at least partially define the cell nest 208. The cell nest 208 may be configured to accommodate at least portions of the recess seals 252, the contact layer 150, and the cell 100. Accordingly, the cell 100 may be at least partially (e.g., partially or entirely) located within the cell nest 208 of the interconnect 200, and the total thickness of the unit cell 300 may be reduced, as compared to if the bottom of the cell 100 was disposed on the peripheral seal surface 204.

As shown in FIG. 6B, a horizontal portion 252H of the recess seal 252 may be located between the cell 100 and the recess seal surface 206 of the interconnect 200 and a vertical portion 252V of the recess seal is located between the edge of the cell 100 and the cell nest 208 sidewall 205. The horizontal portion 252H of the recess seal 252 may have a thickness that is within 20 percent, such as 80 to 120 percent, including 95 to 105 percent of the thickness of the compliant contact layer 150, such that the top of the electrolyte 120 of the cell is located at or slightly above the peripheral seal surface 204 to ensure contact between the air electrode 140 and the air ribs 234. This configuration increases the planarity of the unit cell 300 while providing an improved sealing of the reactant to prevent the reactant from flowing from the reactant field 220 to the air electrode 140 of the cell 100.

In some embodiments, the unit cell 300 may be assembled in a stack and then sintered to reflow and/or cure the seal material. For example, the overlapped portions of the ring seals 254 and the edge seals 250 may be integrated to form an undivided seal structure.

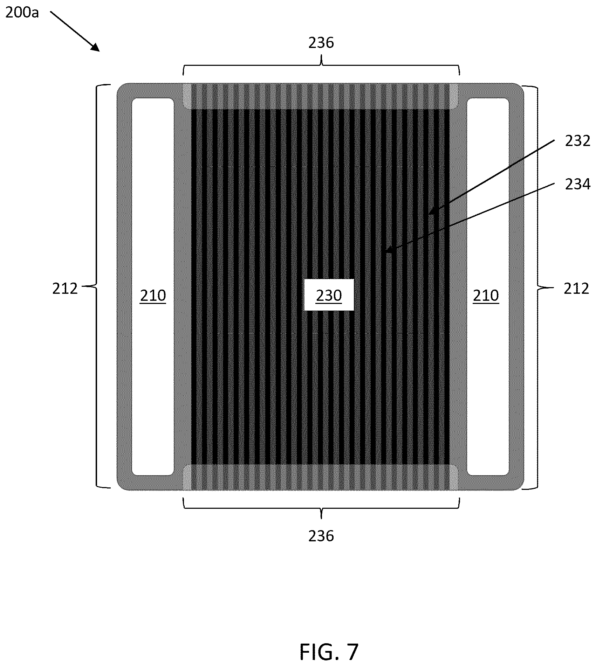

FIG. 7 shows the air side of an alternative interconnect 200a, according to an alternative embodiment of the present disclosure. The interconnect 200a may be similar to the interconnect 200. As such, only the differences between them will be discussed in detail.

Referring to FIG. 7, the air ribs 234 of the interconnect 200a extend into the air side recesses 236. However, the height of the air ribs 234 is reduced within the air side recesses 236, as compared to the height of the air ribs 234 in a remainder of the air field 230. The air side recesses 236 may also extend into the ring seal surfaces 212 laterally past the air ribs 234 in a direction substantially perpendicular to the length direction of the air ribs 234, so as to reduce the area of the ring seal surfaces 212. The height reduction of the air ribs 234 may be 50 to 250 microns, such as 100 to 200 microns. The air side recess 236 recess depth may be 100 to 500 microns, such as 200 to 400 microns. The reactant side of the interconnect 200a may be the same as the reactant side of the interconnect 200.

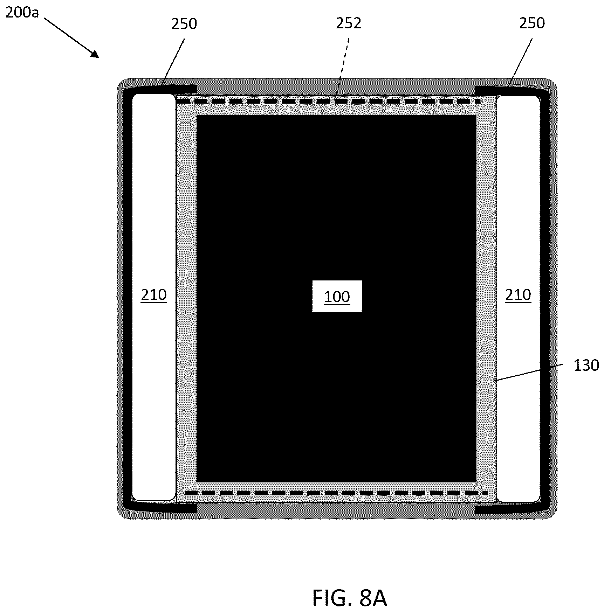

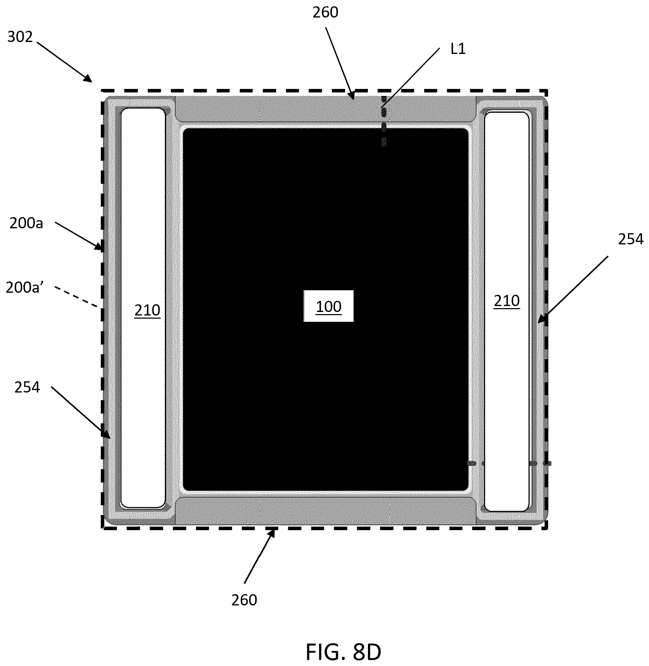

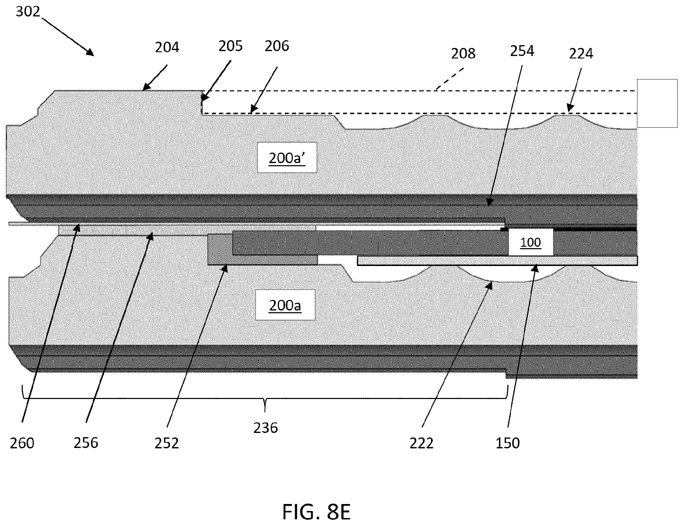

FIGS. 8A-8D are plan views showing the assembly of a unit cell 302 of an electrochemical cell stack, according to an alternative embodiment of the present disclosure, and FIG. 8E is a cross-sectional view taken along line L1 of FIG. 8D. The unit cell 302 may be similar to the unit cell 300. As such, only the differences there between will be discussed in detail.

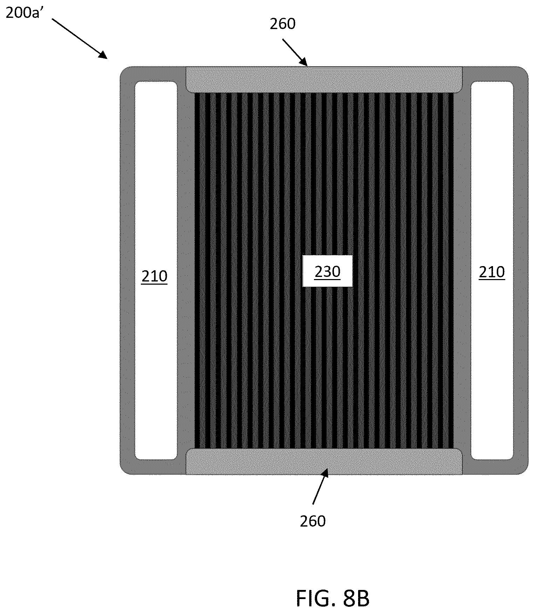

Referring to FIG. 8A, a structure as shown in FIG. 5D may be formed by placing an electrochemical cell 100 and a seal material on a first interconnect 200a. Referring to FIGS. 7 and 8B, metal foils 260 may be disposed on the air side recesses 236 of a second interconnect 200a'. The metal foils 260 may be formed of a metal or metal alloy and may be oxidized during a high temperature anneal in an oxidizing ambient to form a dielectric coating, such as an alumina coating on its surfaces. For example, the metal foils 260 may be formed of an alumina forming material that forms an alumina surface film (i.e., the dielectric coating during the high temperature anneal in the oxidizing ambient). In one embodiment, the metal foils 260 comprise a FeCrAlY alloy. For example, one suitable FeCrAlY alloy is available from Engineered Materials Solutions under the trade name DuraFoil^{™}. The FeCrAlY alloy may contain 19 to 22 wt.% Cr, 5 to 6 wt.% Al, and 0.05-0.15 wt.% Y, and balance Fe and unavoidable impurities. Optionally, the FeCrAlY alloy may additionally contain 0.03-0.1 wt.% Zr. The conversion of the surface of the FeCrAlY alloy foils 260 into an alumina surface film may beneficially reduce and/or prevent electrical shorting and may result in very little chromium evaporation when exposed to air during cell operation. However, any other suitable foil material may be used.

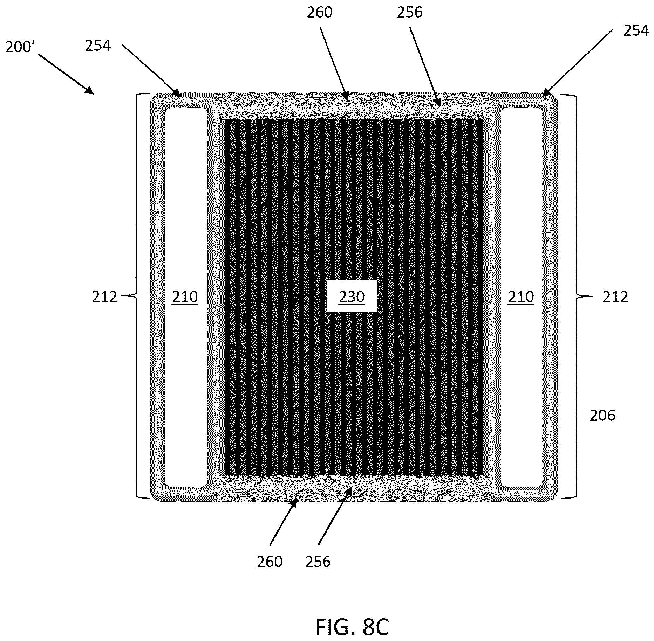

Referring to FIG. 8C, a glass or glass-ceramic seal material may be deposited on the air side of the second interconnect 200a' to form ring seals 254 and foil seals 256. In particular, the seal material used to from the foil seals 256 may extend across the metal foils 260 to connect the ring seals 254. The foil seals 256 are located on the reactant sides of the metal foils 260.

As shown in FIGS. 8D and 8E, the second interconnect 200a' may be placed air side down on the first interconnect 200a and cell 100 structure shown in FIG. 8A to form the unit cell 302. The second interconnect 200a' is transparent in FIG. 8D for clarity. The ring seals 254 may overlap the edge seals 250 and may overlap with portions of the cell 100. The ring seals 254 may also extend over portions of the recess seals 252. The metal foils 260 may be located in the air side recess 236 of the second interconnect 200a'.

Heat and/or pressure may be applied to the unit cell 302 to redistribute the seal material. In particular, the foil seals 256 may reflow to seal the metal foils 260 to the peripheral seal surface 204 of the first interconnect 200a, the recess seals 252, and an upper surface of the cell 100 (e.g., an upper surface of the reactant electrode 130).

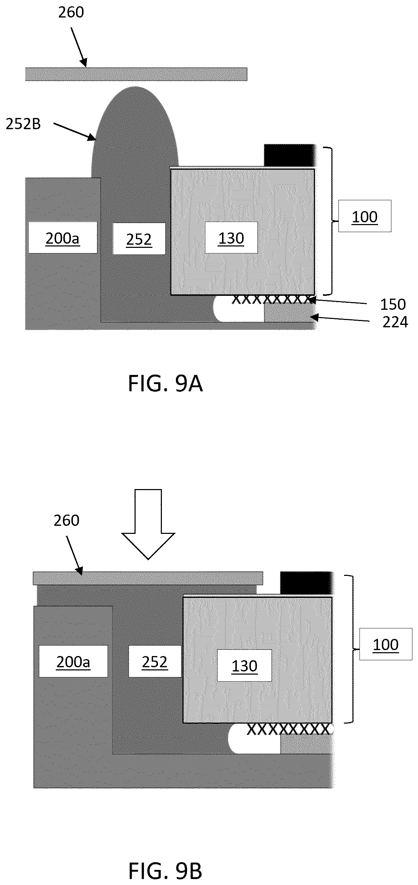

In alternative embodiments, the seal material may not be applied to the metal foils 260 as shown in FIG. 8C. For example, FIGS. 9A and 9B are cross-sectional views showing an alternative method for sealing the metal foils 200, according to various embodiments of the present disclosure.

As shown in FIG. 9A, a larger amount of the seal material may be used to form the recess seal 252 that is applied to the cell nest sidewalls 205. Assembly of the cell 100 on the first interconnect 200a may produce a bulge 252B in the seal material that extends above the cell 100.

As shown in FIG. 9B, when heat and/or pressure is applied to the metal foil 260, the seal material may be compressed between the metal foil 260 and the interconnect 200a, such that the resultant recess seal 252 bonds the metal foil 260 to the peripheral seal surface 204 of the interconnect 200a and the upper surface of the cell 100.

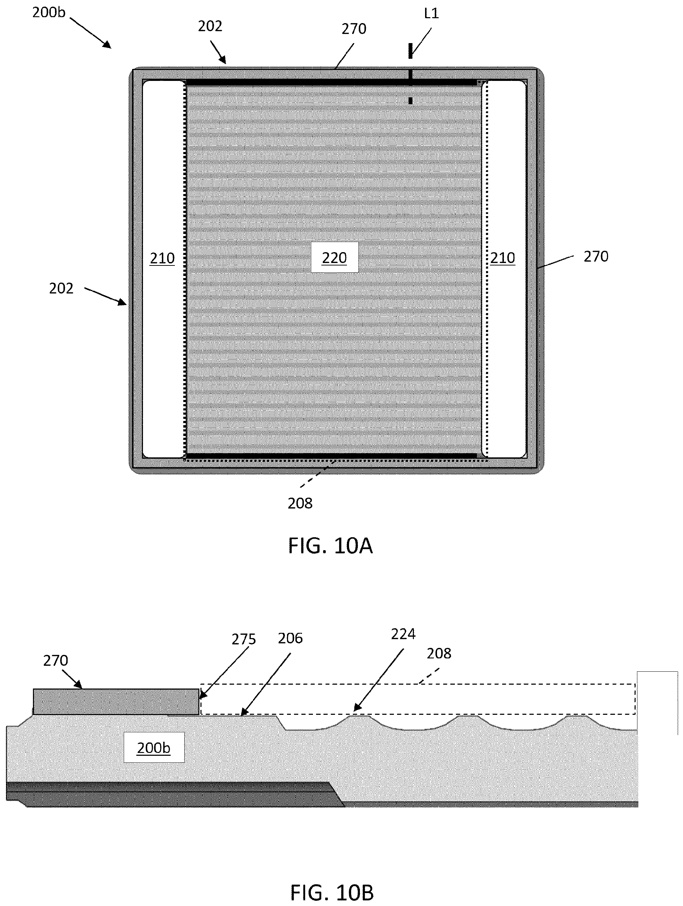

FIG. 10A is a plan view of the reactant side of an alternative interconnect 200b, according to another alternative embodiment of the present disclosure, and FIG. 10B is a cross-sectional view taken through line L1 of FIG. 10A. The interconnect 200b may be similar to the interconnects 200, 200a. As such, only the differences there between will be discussed in detail.

Referring to FIGS. 10A and 10B, instead of forming a recess seal surfaces 206 by recessing portions of the frame 202, a flexible gasket 270 may be disposed on the reactant side of the frame 202 to form recess seal surfaces 206. Sidewalls 275 of the gasket 270, the recess seal surfaces 206, and the tops of the ribs 224 may at least partially define a cell nest 208 configured to receive an electrochemical cell. The interconnect 200b may have an air side as shown in FIGS. 4C or 7.

The gasket 270 may be formed of any suitable compliant material. For example, the gasket 270 may be formed of a compliant metal silicate clay material, such as Thermiculite^{®} 866 or 870 available from Flexitallic US LLC. Thermiculite^{®} is a high temperature sealing material designed for SOFC applications. It is based upon the mineral vermiculite and contains no organic binder or any other organic component. Vermiculite is a natural sheet silicate mineral formed by hydro-thermal modification of biotite and phlogopite mica. It retains all the thermal and chemical durability of mica and remains electrically insulating. Like mica, vermiculite occurs as plate morphology particles, consisting of thousands of individual platelets and having a thickness in a nanometer range, which are stacked together. These particles can be exfoliated to produce a dispersion of individual platelets which are separated from each other. These platelets are highly flexible and conform to the surfaces of other particles to bind them together. This binding action allows a sheet material to be manufactured without any organic binding agents being present. As such, Thermiculite consists just of the chemically exfoliated vermiculite and a second filler material. The second filler material is talc, also known as steatite or soapstone. The second filler material is relatively soft. As such, the combination of the chemically exfoliated vermiculite with steatite results in a material that retains all the chemical and thermal durability usually associated with mica and meanwhile is very soft and conformable. The softness of the material and the platelet alignment allows the material to be compressible under very low load to produce a compacted material that offers a very tortuous and passage stopping path to any gas that is permeating through the material in the plane of the sheet or perpendicular to that plane. Accordingly, the material has sealing characteristics.

The gasket 270 may have a thickness ranging from about 0.20 mm to about 0.90 mm, such as from about 0.28 mm to about 0.68 mm, from about 0.38 mm to about 0.58 mm, or about 0.48 mm. The use of the flexible gasket may allow for a reduction in the overall thickness of the interconnect 200b, as compared to the interconnects 200, 200a. As such, the interconnect 200b may be easier to manufacture.

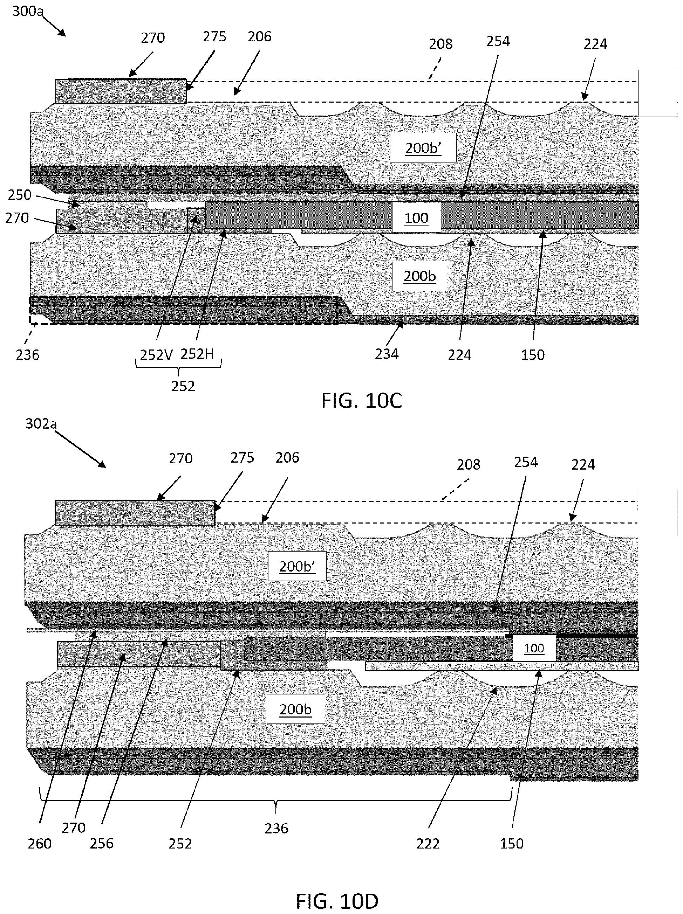

FIG. 10C is a side cross-sectional view of a unit cell 300a of an electrochemical cell stack including the interconnect 200b and a second interconnect 200b' which both include the flexible gasket 270. The unit cell 300a differs from the unit cell 300 shown in FIG. 6B by the presence of the flexible gasket 270. Thus, the interconnect 200b may be used in conjunction with any of the seals described above.

FIG. 10D is a side cross-sectional view of a unit cell 302a of an electrochemical cell stack including the interconnect 200b and a second interconnect 200b' which both include the flexible gasket 270. The unit cell 302a differs from the unit cell 302 shown in FIG. 8E by the presence of the flexible gasket 270. Thus, the interconnect 200b may be used in conjunction with the metal foil 260.

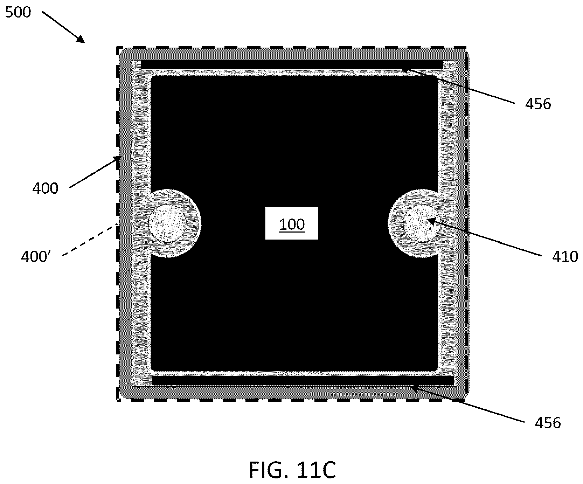

FIG. 11A is a plan view of the reactant side of an alternative interconnect 400, according to various embodiments of the present disclosure, FIG. 11B is a plan view of the air side of the interconnect 400, and FIG. 11C is a plan view showing a unit cell including the alternative interconnects 400 and an electrochemical cell 100.

Referring to FIG. 11A, the alternative interconnect 400 may comprise a counter-flow or co-flow interconnect in which the reactant ribs 424 and the air ribs 434 extend parallel to each other. The reactant side of the interconnect 400 may include a frame 402 that extends around the perimeter of the interconnect 400. In one embodiment, the frame 402 may be an integral portion of the interconnect 400, similar to the frame 202 described above. In another embodiment, the frame 402 may be a flexible gasket disposed on the interconnect 400, as described above with respect to FIGS. 10A and 10B.

The interconnect 400 may include reactant holes 410 disposed adjacent to opposing first and second peripheral edges of the interconnect 400. The reactant holes 410 may be through holes that extend through the interconnect 400 in a thickness direction. The reactant side of the interconnect 400 may include reactant manifolds 411, which comprise flat, recessed parts of the interconnect 400 which are recessed relative to the reactant ribs 424 and the frame 402.

A reactant field 420 that extends between the reactant manifolds 411 and the reactant holes 410. The reactant field 420 may include the reactant channels 422 and the reactant ribs 424 that separate the reactant channels 422. A reactant (e.g., fuel or steam) may flow through the reactant channels 422 and across the reactant field 420, from one of the reactant holes (e.g., the inlet hole) 410 to the other reactant hole (e.g., the outlet hole) 410.

A cell nest 408 may be at least partially defined by sidewalls of the frame 402 and tops of the reactant ribs 424. The cell nest 408 is configured to receive the electrochemical cell 100. An edge seal 450 comprising a glass or glass-ceramic material may be disposed inside of the frame 420. The edge seal 450 may surround the reactant manifolds 411 and the reactant field 420.

Referring to FIG. 11B, the air side of the interconnect 400 may include an air field 430. The air field 430 may include the air channels 432 and the air ribs 434 that separate the air channels 432. The air side of the interconnect 400 may also include raised ring seal surfaces 412 that surround the reactant holes 410, and raised strip seal surfaces 446 disposed on opposing sides of the air field 430 (i.e., on third and fourth edges of the interconnect 400). Ring seals 454 are located the ring seal surfaces 412 and surround the reactant holes 410. Strip seals 456 may be disposed on the strip seal surfaces 446.

Air may flow through the air channels 432 from opposing peripheral edges (e.g., first and second edges) of the interconnect 400. Accordingly, air and reactant may flow on opposite sides of the interconnect 400 in substantially parallel or opposing directions.

Referring to FIG. 11C, a unit cell 500 may include an electrochemical cell 100, such as an RESE cell, located between a first interconnect 400 and a second interconnect 400' in the cell nest 408. The reactant side of the cell 100 may be sealed to the reactant side of the first interconnect 400 by the edge seal 450. The strip seal surfaces 446 of the second interconnect 400' may be sealed to the frame 402 of the first interconnect 400 by the strip seals 456. As such, opposing ends of the air field 430 of the second interconnect 400' are exposed to ambient air in the electrochemical cell system to provide air flow to the cell 100.

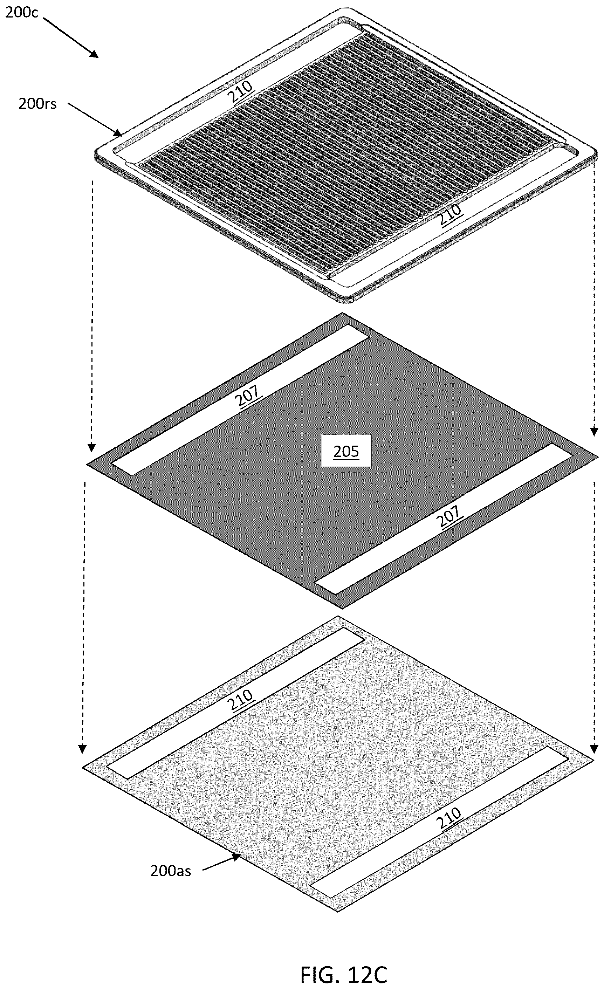

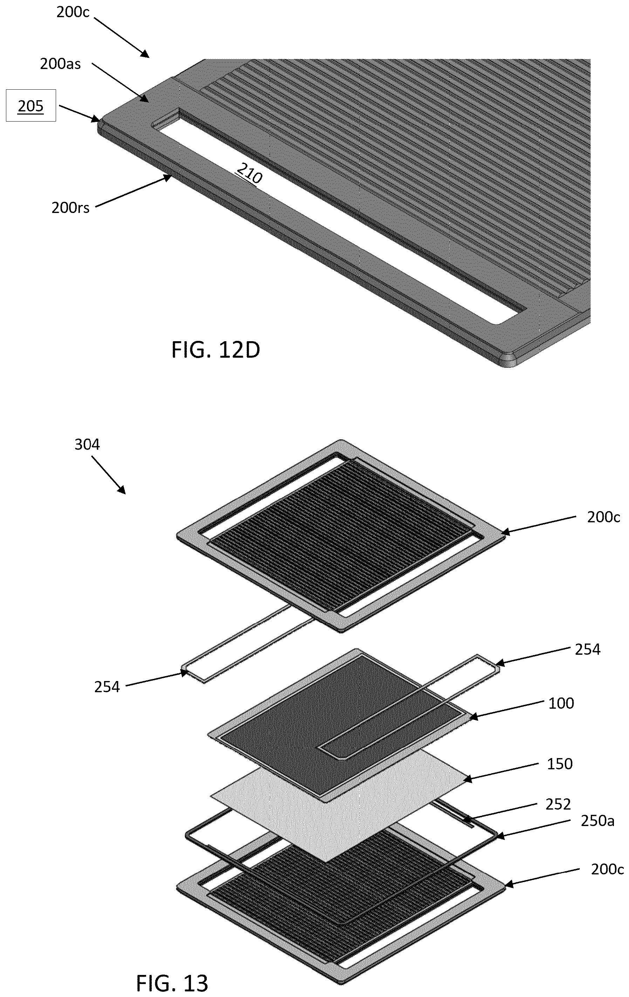

FIG. 12A is a perspective view showing the reactant side (e.g., fuel side) sheet 200rs of an alternative interconnect 200c, according to various embodiments of the present disclosure, FIG. 12B is a perspective view showing an air side sheet 200as of the alternative interconnect 200c, according to various embodiments of the present disclosure, FIG. 12C shows a process of forming the alternative interconnect 200c using the sheets 200rs, 200as of FIGS. 12A and 12B, and FIG. 12D is a perspective view of the completed alternative interconnect 200c.

Referring to FIGS. 12A and 12B, the sheets 200rs, 200as may be formed by any suitable sheet metal forming method. For example, the sheets 200rs, 200as may be formed by stamping sheet metal, such as a ferritic stainless steel sheet, using a stamping process or another similar process. The sheets 200rs, 200as include the above described reactant holes 210. The reactant holes 210 may be formed by cutting, punching, or any other suitable sheet metal patterning method. The reactant side sheet 200rs may have a first side that includes reactant side interconnect features, a reactant field 220 and a cell nest 208, and an opposing second side that is substantially flat. The air side sheet 200as may have a first side that includes air side interconnect features such as an air field 230, and an opposing second side that is substantially flat.

Referring to FIG. 12C, the sheets 200rs, 200as may be joined to each other using any suitable metal joining method, such as brazing, welding, bonding, etc. In one embodiment, the sheets 200rs, 200as may be provided on opposing sides of a brazing material 205. The sheets 200rs, 200as may be arranged such that the substantially flat second sides thereof contact the brazing material 205. The brazing material 205 may be in the form of a substantially flat sheet having openings 207 that correspond to the reactant holes 210 of the sheets 200rs, 200as. The brazing material 205 may comprise any suitable brazing metal or alloy, such as a nickel and/or noble metal containing alloy. The resultant structure may be heated such that the brazing material 205 forms an air-tight bond between the reactant side sheet 200rs and the air side sheet 200as to produce a completed crossflow interconnect 200c, as shown in FIG. 12D. The brazing material 205 remains between the two sheets 200rs, 200as in the completed interconnect.

In an alternative embodiment, the brazing material 205 may be omitted and the sheets 200a, 200b may be directly welded together, for example, by laser welding. In other embodiments, the above sheet joining method may also be used to form a counter-flow or co-flow interconnect 400 as shown in FIGS. 11A and 11B.

FIG. 13 is an expanded perspective view showing elements a unit cell 304 of an electrochemical cell stack, according to an alternative embodiment of the present disclosure, The unit cell 304 may be similar to the unit cells 300 and 302. As such, only the differences there between will be discussed in detail.

The unit cell 304 may include the joined sheet interconnect 200c shown in FIGS. 12A - 12D. Furthermore, in this embodiment, instead of the generally C-shaped edge seals 250, the edge seals 250a may have a hollow rectangle shape and completely surround the periphery of the reactant side sheet 200rs of the interconnect 200c, similar to the above described gasket 270 shown in FIGS. 10A and 10B. Thus, the edge seals 250a surround the area which includes the reactant field 220, the reactant openings 210 and the recess seals 252.

According to various embodiments, forming an interconnect by joining (e.g., bonding, brazing, welding, etc.) reactant side and air side sheets may significantly reduce interconnect fabrication costs, as compared to utilizing more costly processes, such as computer numerical control (CNC) machining, electrical discharge machining (EDM), or 3D printing methods. In addition, when an interconnect is formed from two sheets, the sheets are not exposed to both fuel and air when utilized in an electrochemical cell stack. As such, interconnect corrosion due to the dual atmospheric effect may be reduced and/or prevented.

Fuel cell and electrolyzer systems of the embodiments of the present disclosure are designed to reduce greenhouse gas emissions and have a positive impact on the climate.

Any one or more features from any one or more embodiments may be used in any suitable combination with any one or more features from one or more of the other embodiments. Although the foregoing refers to particular preferred embodiments, it will be understood that the invention is not so limited. It will occur to those of ordinary skill in the art that various modifications may be made to the disclosed embodiments and that such modifications are intended to be within the scope of the invention. All of the publications, patent applications and patents cited herein are incorporated herein by reference in their entirety.

### The invention also refers to the following embodiments, wherein the term "claim" means "embodiment":

1. An interconnect for an electrochemical cell stack, comprising:
   reactant holes that extend through the interconnect;
   a reactant side comprising:
      a reactant field comprising reactant channels and reactant ribs that extend between the reactant holes;
      a peripheral seal surface that extends around a perimeter of the interconnect;
      recess seal surfaces disposed inside portions of the peripheral seal surface on opposing sides of the reactant field and recessed relative to the peripheral seal surface;
         and
      nest sidewalls that connect the recess seal surfaces to the peripheral seal surface, wherein the nest sidewalls extend substantially perpendicular to the peripheral seal surface and to the recess seal surfaces, and wherein the nest sidewalls, the recess seal surfaces, and tops of the reactant ribs at least partially define a cell nest configured to receive an electrochemical cell; and
   an opposing air side comprising:
      an air field disposed between the reactant holes; and
      ring seal surfaces disposed around the reactant holes.
2. The interconnect of claim 1, wherein the air field comprises:
   air channels between the reactant holes; and
   air ribs adjacent to the air channels.
3. The interconnect of claim 2, further comprising air side recesses disposed on opposing sides of the air field, wherein the air side ribs are shorter in height in the air side recesses than in the air field.
4. The interconnect of claim 2, further comprising air side recesses disposed on opposing sides of the air field, wherein the air side recesses are free of the air ribs and the air side recesses are coplanar with bottoms of the air channels in the air field.
5. The interconnect of claim 2, wherein the reactant channels and the air channels extend in substantially perpendicular directions.
6. The interconnect of claim 2, wherein the reactant channels and the air channels extend substantially parallel to each other.
7. The interconnect of claim 1, wherein the nest sidewalls have a height between 0.2 mm and 1 mm.
8. The interconnect of claim 1, wherein the interconnect comprises a ferritic stainless steel material.
9. The interconnect of claim 1, wherein the recess seal surfaces are coplanar with the tops of the reactant ribs.
10. The interconnect of claim 1, wherein the interconnect further comprises a flexible gasket that is disposed on the reactant side, and wherein the gasket forms the peripheral seal surface and the nest sidewalls.
11. A unit cell of an electrochemical cell stack, the unit cell comprising:
   a first interconnect of claim 1;
   an electrochemical cell disposed in the cell nest of the first interconnect; and
   a second interconnect of claim 1 disposed air side down on the first interconnect and the electrochemical cell.
12. The unit cell of claim 11, further comprising:
   at least one reactant seal disposed on the peripheral seal surface;
   recess seals disposed between the electrochemical cell and both of the nest sidewalls and the seal recess surfaces of the first interconnect; and
   ring seals disposed between the electrochemical cell and the ring seal surfaces of the second interconnect.
13. The unit cell of claim 12, further comprising foils disposed between the second interconnect and the recess surface seals.
14. The unit cell of claim 13, wherein:
   the foils comprise a FeCrAlY alloy having an alumina surface film; and
   the foils overlap with the air field of the second interconnect and portions of the electrochemical cell.
15. The unit cell of claim 11, wherein the first interconnect further comprises a flexible gasket that is disposed on the reactant side, and that forms the peripheral seal surface and the nest sidewalls.
16. The unit cell of claim 11, wherein:
   a compliant contact layer is disposed in the cell nest below the electrochemical cell, such that the compliant contact layer contacts the tops of the reactant ribs and a bottom of the electrochemical cell;
   the at least one reactant seal, the recess seals and the ring seals comprise a glass or glass-ceramic material; and
   electrochemical cell comprises a solid oxide fuel cell or a solid oxide electrolyzer cell.
17. A method of forming a unit cell of an electrochemical cell stack, comprising:
   applying a seal material to a peripheral seal surface of a reactant side of a first interconnect, such that the seal material at least partially surrounds reactant holes and a reactant field of the first interconnect;
   applying the seal material to recess seal surfaces disposed inside of the peripheral seal surface on opposing sides of the reactant field and recessed relative to the peripheral seal surface;
   applying the seal material to nest sidewalls that connect the recess seal surfaces to the peripheral seal surface, wherein the nest sidewalls extend substantially perpendicular to the peripheral seal surface and to the recess seal surfaces, and wherein the nest sidewalls, the recess seal surfaces, and tops of reactant ribs of the reactant field at least partially define a cell nest;
   disposing a compliant contact layer in the cell nest, such that the contact layer contacts tops of reactant ribs in the reactant field;
   disposing an electrochemical cell on the compliant contact layer in the cell nest, such that opposing ends of the cell contact the seal material applied to recess seal surfaces and to the nest sidewalls;
   applying the seal material to ring seal surfaces of an air side of a second interconnect; and
   disposing the second interconnect on the first interconnect such that air ribs in an air field of the second interconnect contact the electrochemical cell.
18. The method of claim 17, wherein the seal material applied to the ring seal surfaces of the second interconnect contacts the seal material applied to the peripheral seal surface of the first interconnect.
19. The method of claim 17, further comprising, prior to disposing the second interconnect on the first interconnect:
   disposing a foil on an air side recess of the air side of the second interconnect; and
   pressing the foil against a bulge in the seal material applied to the nest sidewalls that extends above the electrochemical cell to compress the seal material between the metal foil and the electrochemical cell, and to bond the foil to an upper surface of the electrochemical cell.
20. The method of claim 17, further comprising, prior to disposing the second interconnect on the first interconnect:
   disposing a foil on an air side recess of the air side of the second interconnect; and
   applying the seal material to the foil, such that the seal material seals the foil to the electrochemical cell.
21. The method of claim 17, further comprising forming at least one of the first interconnect and the second interconnect by:
   stamping a metal sheet to form a reactant side sheet comprising a first side having reactant side features and an opposing second side that is substantially flat;
   stamping a metal sheet to form an air side sheet comprising a first side having air side features and an opposing second side that is substantially flat; and
   joining the second sides of the reactant side sheet and the air side sheet using a brazing process or a welding process to form the first interconnect or the second interconnect.
22. The interconnect of claim 1, wherein the interconnect comprises:
   a reactant side sheet comprising a first side having reactant side features and an opposing second side that is substantially flat; and
   an air side sheet comprising a first side having air side features and an opposing second side that is substantially flat, wherein the second side of the reactant side sheet is joined to the second side of the air side sheet.
23. The interconnect of claim 22, further comprising a braze material located between the second side of the reactant side sheet and the second side of the air side sheet, wherein the second side of the reactant side sheet is brazed to the second side of the air side sheet.

## Claims

1. An interconnect for an electrochemical cell stack, comprising:
reactant holes that extend through the interconnect;
a reactant side comprising:
a reactant field comprising reactant channels and reactant ribs that extend between the reactant holes;
a peripheral seal surface that extends around a perimeter of the interconnect;
recess seal surfaces disposed inside portions of the peripheral seal surface on opposing sides of the reactant field and recessed relative to the peripheral seal surface; and
nest sidewalls that connect the recess seal surfaces to the peripheral seal surface, wherein the nest sidewalls extend substantially perpendicular to the peripheral seal surface and to the recess seal surfaces, and wherein the nest sidewalls, the recess seal surfaces, and tops of the reactant ribs at least partially define a cell nest configured to receive an electrochemical cell; and
an opposing air side comprising:
an air field disposed between the reactant holes; and
ring seal surfaces disposed around the reactant holes.

2. The interconnect of claim 1, wherein the air field comprises:
air channels between the reactant holes; and
air ribs adjacent to the air channels.

3. The interconnect of claim 2, further comprising air side recesses disposed on opposing sides of the air field, wherein the air side ribs are shorter in height in the air side recesses than in the air field.

4. The interconnect of claim 2, further comprising air side recesses disposed on opposing sides of the air field, wherein the air side recesses are free of the air ribs and the air side recesses are coplanar with bottoms of the air channels in the air field.

5. The interconnect of claim 2, wherein the reactant channels and the air channels extend in substantially perpendicular directions.

6. The interconnect of claim 1, wherein the interconnect comprises a ferritic stainless steel material, and wherein the recess seal surfaces are coplanar with the tops of the reactant ribs.

7. The interconnect of claim 1, wherein the interconnect further comprises a flexible gasket that is disposed on the reactant side, and wherein the gasket forms the peripheral seal surface and the nest sidewalls.

8. A unit cell of an electrochemical cell stack, the unit cell comprising:
a first interconnect of claim 1;
an electrochemical cell disposed in the cell nest of the first interconnect; and
a second interconnect of claim 1 disposed air side down on the first interconnect and the electrochemical cell.

9. The unit cell of claim 8, further comprising:
at least one reactant seal disposed on the peripheral seal surface;
recess seals disposed between the electrochemical cell and both of the nest sidewalls and the seal recess surfaces of the first interconnect;
ring seals disposed between the electrochemical cell and the ring seal surfaces of the second interconnect;
foils disposed between the second interconnect and the recess surface seals, wherein the foils comprise a FeCrAlY alloy having an alumina surface film, and the foils overlap with the air field of the second interconnect and portions of the electrochemical cell.

10. The unit cell of claim 8, wherein the first interconnect further comprises a flexible gasket that is disposed on the reactant side, and that forms the peripheral seal surface and the nest sidewalls.

11. The unit cell of claim 10, wherein:
a compliant contact layer is disposed in the cell nest below the electrochemical cell, such that the compliant contact layer contacts the tops of the reactant ribs and a bottom of the electrochemical cell;
the at least one reactant seal, the recess seals and the ring seals comprise a glass or glass-ceramic material; and
electrochemical cell comprises a solid oxide fuel cell or a solid oxide electrolyzer cell.

12. The interconnect of claim 1, wherein the interconnect comprises:
a reactant side sheet comprising a first side having reactant side features and an opposing second side that is substantially flat;
an air side sheet comprising a first side having air side features and an opposing second side that is substantially flat, wherein the second side of the reactant side sheet is joined to the second side of the air side sheet; and
a braze material located between the second side of the reactant side sheet and the second side of the air side sheet, wherein the second side of the reactant side sheet is brazed to the second side of the air side sheet.

13. A method of forming a unit cell of an electrochemical cell stack, comprising:
applying a seal material to a peripheral seal surface of a reactant side of a first interconnect, such that the seal material at least partially surrounds reactant holes and a reactant field of the first interconnect;
applying the seal material to recess seal surfaces disposed inside of the peripheral seal surface on opposing sides of the reactant field and recessed relative to the peripheral seal surface;
applying the seal material to nest sidewalls that connect the recess seal surfaces to the peripheral seal surface, wherein the nest sidewalls extend substantially perpendicular to the peripheral seal surface and to the recess seal surfaces, and wherein the nest sidewalls, the recess seal surfaces, and tops of reactant ribs of the reactant field at least partially define a cell nest;
disposing a compliant contact layer in the cell nest, such that the contact layer contacts tops of reactant ribs in the reactant field;
disposing an electrochemical cell on the compliant contact layer in the cell nest, such that opposing ends of the cell contact the seal material applied to recess seal surfaces and to the nest sidewalls;
applying the seal material to ring seal surfaces of an air side of a second interconnect; and
disposing the second interconnect on the first interconnect such that air ribs in an air field of the second interconnect contact the electrochemical cell.

14. The method of claim 13, further comprising, prior to disposing the second interconnect on the first interconnect:
disposing a foil on an air side recess of the air side of the second interconnect; and
pressing the foil against a bulge in the seal material applied to the nest sidewalls that extends above the electrochemical cell to compress the seal material between the metal foil and the electrochemical cell, and to bond the foil to an upper surface of the electrochemical cell.

15. The method of claim 13, further comprising, prior to disposing the second interconnect on the first interconnect:
disposing a foil on an air side recess of the air side of the second interconnect; and
applying the seal material to the foil, such that the seal material seals the foil to the electrochemical cell.
